Europäisches Patentamt

European Patent Office

Office européen des brevets

(19)

(11) Numéro de publication : **0 084 991**
**B1**

(12) ## FASCICULE DE BREVET EUROPÉEN

(45) Date de publication du fascicule du brevet :
05.04.89

(51) Int. Cl.⁴ : **E 02 F 5/10, F 16 L 1/02**

(21) Numéro de dépôt : **83400073.9**

(22) Date de dépôt : **12.01.83**

(54) **Procédé et dispositif pour l'obtention de données relatives à la position dans un plan vertical d'une conduite souple en cours d'enfouissement.**

(30) Priorité : **22.01.82 FR 8201005**

(43) Date de publication de la demande :
**03.08.83 Bulletin 83/31**

(45) Mention de la délivrance du brevet :
**05.04.89 Bulletin 89/14**

(84) Etats contractants désignés :
**AT BE CH DE GB IT LI LU NL SE**

(56) Documents cités :
**FR-A- 2 138 063**
**FR-A- 2 268 905**
**FR-A- 2 422 994**
**GB-A- 890 587**
**US-A- 4 012 918**
**US-A- 4 050 171**

(73) Titulaire : **Pelsy, Gilles**
**47 rue Benard**
**F-75014 Paris (FR)**

(72) Inventeur : **Pelsy, Gilles**
**47 rue Benard**
**F-75014 Paris (FR)**

(74) Mandataire : **Bonnetat, Christian et al**
**Cabinet PROPI Conseils 23 rue de Léningrad**
**F-75008 Paris (FR)**

EP 0 084 991 B1

**Description**

La présente invention concerne un procédé et un dispositif pour l'obtention de données relatives à la position dans un plan vertical d'une conduite souple, tel qu'un drain, en cours d'enfouissement dans le sol par un outil de travail, et/ou la position dudit outil de travail.

Par le document FR-A-2 268 905, on connaît déjà une machine à poser les drains dans laquelle on détecte simplement, grâce à un élément sensible approprié, toute déviation de l'outil de travail par rapport à la profondeur de creusement requise. Les dispositifs connus de ce type présentent l'inconvénient de laisser une grande incertitude quant à la position, notamment instantanée, du drain en cours d'enfouissement et la position de l'outil relativement audit drain, et particulièrement les pentes instantanées du drain et de l'outil de travail du sol.

En outre, ces dispositifs connus ne permettent pas de régler avec précision, en fonction du terrain et du profil, la pression d'appui exercée sur l'outil par l'engin supportant ou tractant ce dernier.

De plus, il n'est pas possible de connaître la trajectoire effectivement suivie par le drain et notamment sa pente. On sait que cette dernière information est primordiale puisque l'efficacité d'un drain est largement liée au respect de pentes imposées et prévues.

La présente invention remédie à ces inconvénients et concerne un procédé permettant d'obtenir par mesures et calculs les données nécessaires à la détermination des paramètres importants concernant les conditions d'avancement de l'outil et de pose d'une conduite souple au fond d'une tranchée. Le dispositif pour la mise en œuvre du procédé selon l'invention permet en outre d'agir sur lesdites conditions de déroulement du travail d'enfouissement afin que celles-ci se réalisent de la meilleure façon.

A cette fin, selon l'invention, le procédé pour la détermination de la position dans un plan sensiblement vertical d'une conduite souple, tel qu'un drain, en cours d'enfouissement dans le sol au fond d'une tranchée par un outil de travail, est caractérisé en ce que l'on détecte en continu l'inclinaison d'au moins un élément palpeur lié à l'outil, en contact avec la portion élémentaire de conduite souple venant d'être posée au fond de la tranchée, ladite inclinaison étant représentative de la pente par rapport à un plan horizontal de la portion élémentaire de conduite souple venant d'être posée au fond de la tranchée et en ce qu'on détermine ladite position de la conduite souple à partir de l'ensemble des mesures successives des inclinaisons des portions élémentaires de conduite souple.

Selon une première application, on mesure la longueur de conduite souple posée, on calcule en continu l'ordonnée y des portions élémentaires de conduite successives posées en fonction de l'abscisse x desdites portions élémentaires et des différentes pentes dy/dx successives des portions élémentaires de conduite.

Dans une seconde application du procédé, on mesure l'angle que fait l'outil de travail avec la direction de la portion élémentaire de conduite posée, on compare ledit angle avec un angle de référence donné en fonction du profil de l'outil et de la nature du sol, et on agit en fonction de cette différence sur la pression d'appui exercée sur l'outil de travail.

Selon un troisième exemple d'application du procédé, on mesure l'angle que fait l'outil avec la direction de la portion élémentaire de conduite souple posée, on calcule la valeur théorique de cet angle correspondant à la position optimale de l'outil, on compare la valeur calculée et la valeur mesurée de cet angle, la différence de ces deux valeurs permettant d'agir sur des moyens d'actionnement modifiant la position de l'outil.

L'invention concerne également un dispositif pour la mise en œuvre du procédé selon l'invention, comportant un organe palpeur dont l'inclinaison est représentative de la pente de la portion élémentaire de conduite souple venant d'être posée, un organe de mesure de ladite inclinaison, tel qu'un inclinomètre, et des moyens pour déterminer ladite position de la conduite souple à partir de la mesure de ladite inclinaison.

Dans un exemple de réalisation, le dispositif, particulièrement adapté à la mise en œuvre de la première application du procédé, comporte des moyens de calcul des ordonnées des portions élémentaires de conduite posées en fonction de l'abscisse x, un organe de calcul des pentes instantanées desdites portions élémentaires associé à des moyens pour enregistrer et visualiser les données calculées et mesurées, lesdits moyens de calcul étant aptes à effectuer la correction nécessaire due à la sensibilité de l'inclinomètre à la pesanteur.

Suivant un autre exemple de réalisation, pour la mise en œuvre des seconde et troisième applications du procédé, le dispositif comporte en outre des moyens de mesure, tels qu'un détecteur de proximité associé à l'organe palpeur, aptes à mesurer l'angle que fait l'outil de travail avec ledit palpeur.

Plus spécialement, pour la mise en œuvre de la seconde application, le dispositif comporte en outre des moyens de calcul permettant de comparer la valeur de l'angle mesurée avec une valeur de référence donnée en fonction du profil de l'outil et de la nature du sol, et des moyens d'actionnement aptes à modifier la pression d'appui exercée sur ledit outil en fonction de la différence entre la valeur mesurée et la valeur de référence.

Avantageusement, l'organe palpeur est constitué d'un bras articulé sensiblement en son milieu à l'extrémité arrière de l'outil, la partie arrière du bras dépassant de l'outil d'une longueur représentant la portion élémentaire de conduite venant d'être posée, tandis que la partie avant du bras est associée audit inclinomètre.

Afin d'obliger constamment l'organe palpeur à suivre le tronçon de tranchée juste ouverte, le dispositif comporte un organe de rappel, tel qu'un ressort, permettant d'obliger constamment l'organe palpeur à suivre le tronçon du fond de la tranchée venant d'être ouverte.

Les figures annexées feront bien comprendre comment l'invention peut être réalisée.

La figure 1 montre schématiquement de côté le dispositif selon l'invention appliqué à l'enfouissement d'un drain à l'aide d'un outil de travail tracté par un engin roulant sur le sol.

La figure 2 est une vue schématique de côté montrant les inclinaisons relatives du drain et de l'outil en cours de travail.

La figure 3 est une vue agrandie schématique de l'extrémité arrière de l'outil muni d'un exemple de réalisation du dispositif selon l'invention.

La figure 4 est une vue en coupe transversale schématique et partielle, selon la ligne IV-IV de la figure 5, montrant un mode de réalisation du dispositif selon l'invention agencé dans un outil de travail.

La figure 5 est une vue en coupe longitudinale schématique et partielle selon la ligne V-V de la figure 4.

Les figures 6, 7 et 8 sont des schémas synoptiques de fonctionnement des moyens de mesure et de calcul associés aux moyens de mesure.

La figure 9 est un schéma théorique montrant les liaisons angulaires entre les différentes accélérations auxquelles est soumis l'inclinomètre.

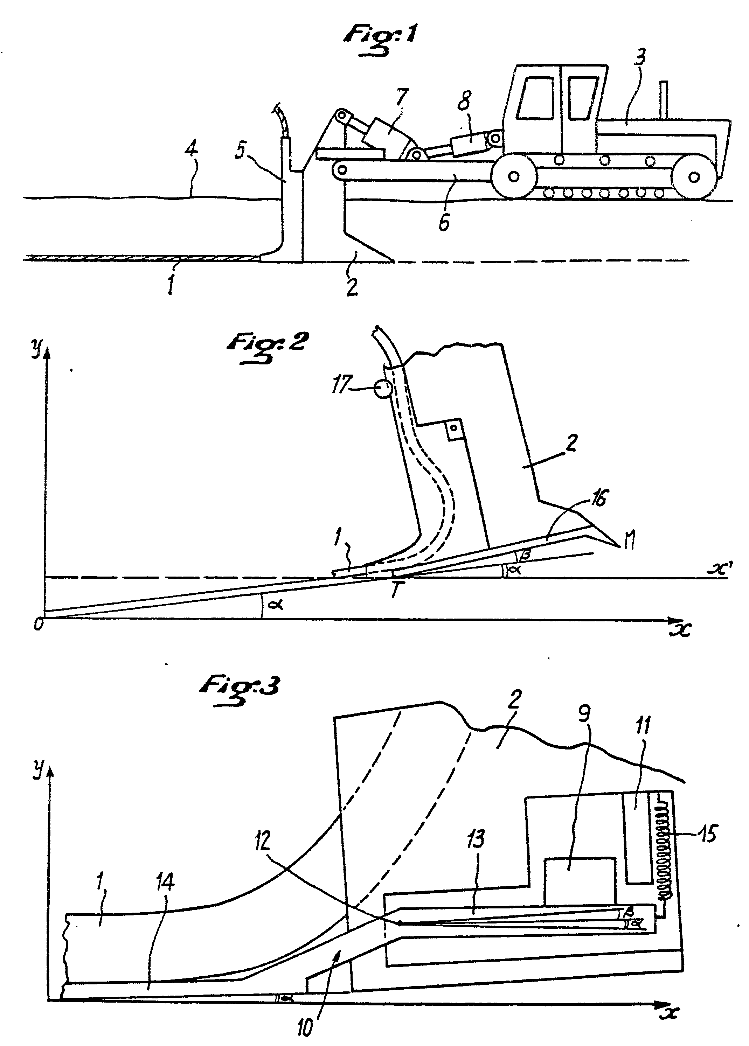

La figure 1 montre un exemple d'application du dispositif à l'enfouissement d'un drain 1 à l'aide d'un outil de travail 2 supporté et tracté par un engin 3 roulant sur le sol 4. L'outil 2 est constitué d'une dent apte à creuser une tranchée dans le sol et comporte des moyens de guidage 5 du drain 1 afin que ce dernier soit enfoui au fond de la tranchée ouverte. La dent 2 est articulée sur un bâti 6 et est apte à pivoter grâce à l'action d'un vérin 7. Le bâti 6 peut lui-même pivoter autour d'un axe lié audit engin 3 grâce à un vérin 8. Le réglage des deux vérins 7 et 8 permet d'ajuster la position de la dent 2 et la pression d'appui exercée par l'engin 3 sur la dent 2.

Sur la figure 1, pour des raisons de commodité, le bâti 6, la dent 2 et les vérins 7, 8 sont représentés agrandis par rapport à l'engin 3.

Sur la figure 2, on a représenté un système d'axes fixes O, x, y dans lequel la dent trancheuse 2 se déplace en translation parallèlement à elle-même le long de l'axe Ox vers la droite de la figure. La dent 2, au fur et à mesure de son avancement, enfouit un drain souple 1 qui se déroule à la partie arrière de la dent, et débouche de celle-ci parallèlement au fond de la tranchée ouverte.

Le tronçon de drain enfoui 1 fait un angle $\alpha$ avec l'horizontale T, x' (parallèle à O, x). La base de la dent elle-même fait un angle $\beta$ avec la direction du tronçon de drain enfoui 1.

La mesure de ces angles $\alpha$ et $\beta$ peut être effectuée par le dispositif selon l'invention à l'aide (voir la figure 3) respectivement d'un inclinomètre 9 et d'un détecteur de proximité 11, tous deux associés à un organe palpeur 10. Ce dernier est apte à pivoter autour d'un axe 12 transversal à l'avance de la dent 2 et disposé à l'extrémité arrière de celle-ci. La partie avant 13 de l'organe palpeur 10 supporte l'inclinomètre 9, tandis que sa partie arrière 14 dépasse de l'arrière de la dent 2 et repose sur le fond de la tranchée ouverte par l'outil, tout en supportant le tronçon de drain 1 dépassant dudit outil 2. Un ressort de rappel 15, solidaire par ses extrémités de la dent 2 et de l'extrémité de la partie avant 13 de l'organe palpeur 10, maintient, par effet de levier, la partie arrière 14 plaquée contre le fond de la tranchée. Ainsi, l'inclinaison de l'incrément du tronçon de drain venant d'être posé est représenté par l'inclinaison de l'organe palpeur 10. Par suite, toute variation de pente du fond de la tranchée et donc du tronçon de drain 1, se traduit par une rotation de l'organe palpeur 10 autour de son axe 12, dont l'amplitude est mesurée par l'inclinomètre 9. On peut alors connaître la valeur de l'angle $\alpha$ que fait l'incrément de tronçon de drain posé 1 avec l'horizontale, c'est-à-dire la pente de ce dernier.

De même, l'inclinaison relative, représentée par l'angle de l'organe palpeur 10 (c'est-à-dire du drain posé 1) et de la dent 2 est mesurée grâce au détecteur de proximité 11 (lié à la dent 2 selon l'exemple de réalisation montré sur la figure 3). L'extrémité de la partie avant 13 de l'organe palpeur 10 s'en écarte ou s'en approche selon les variations angulaires relatives de la dent 1 et de l'organe palpeur 10.

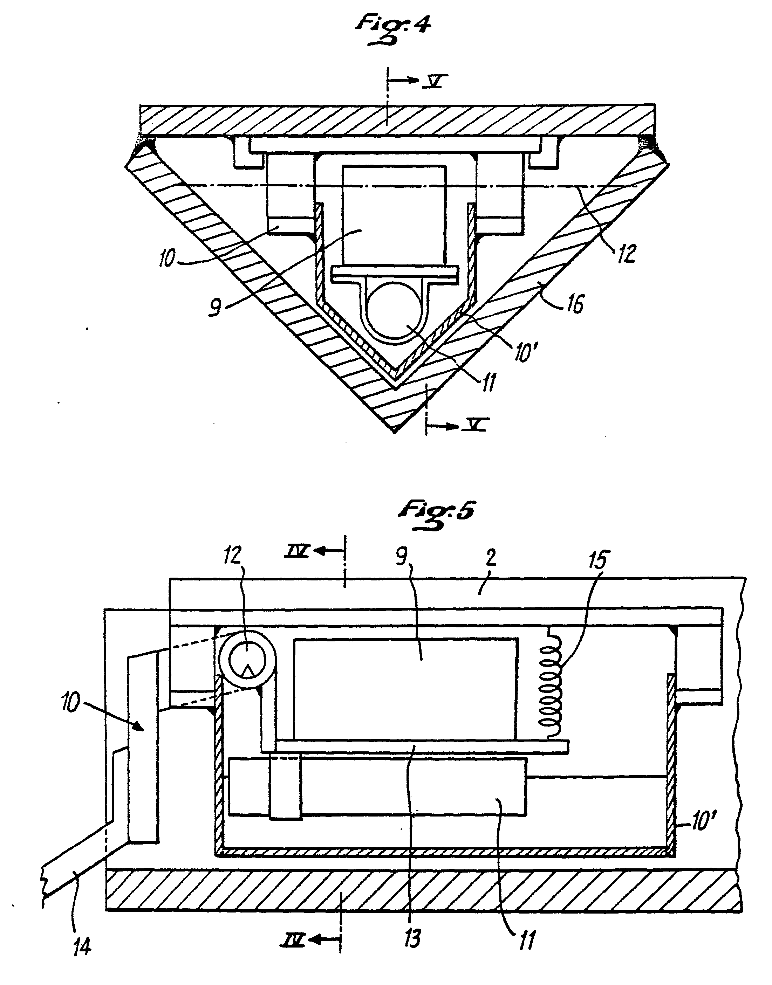

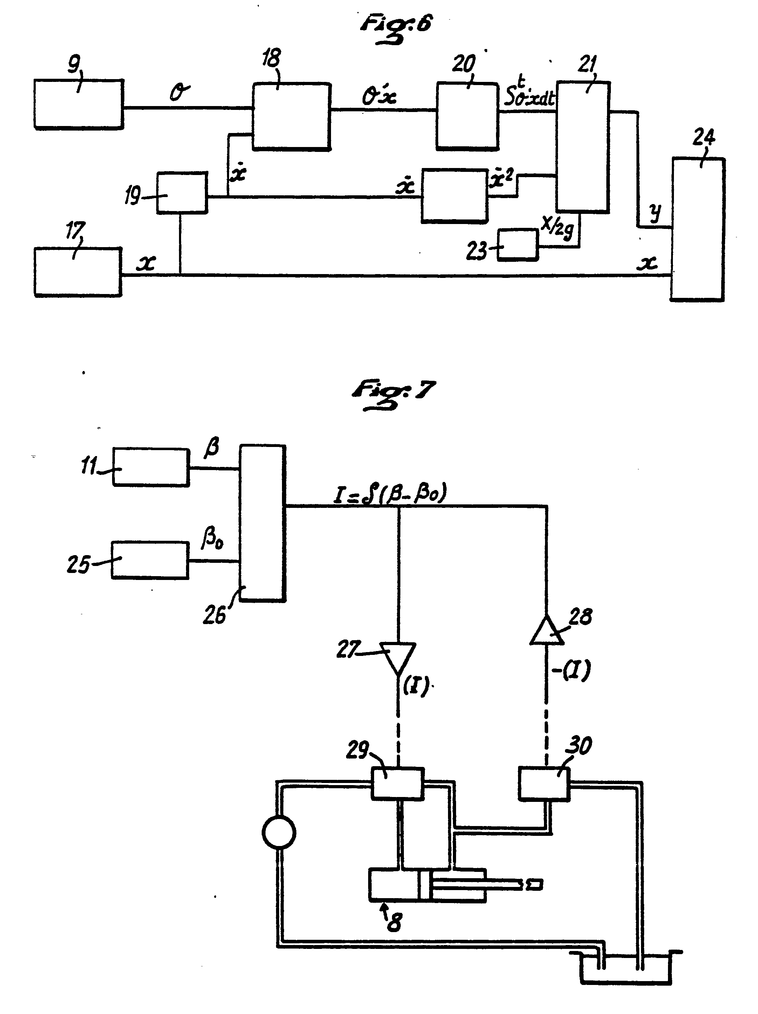

Sur les figures 4 et 5, on a représenté un mode de réalisation du dispositif montrant ce dernier disposé dans l'embase 16 en forme de V de la dent 2. Le détecteur de proximité 11, en forme de cylindre, est disposé sous la partie avant 13 de l'organe palpeur 10. Cette variante (figure 4) selon laquelle le détecteur 11 est solidaire de l'organe palpeur 10 est préférée à celle où ce même détecteur est solidaire de la dent 2 (figure 3). L'ensemble formé par l'inclinomètre 9, le détecteur de proximité 11 et la partie avant 13 de l'organe palpeur 10 pivote autour de l'axe 12 à l'intérieur d'une enveloppe 10'.

Les organes montrés dans ce mode de réalisation exercent les mêmes fonctions que ceux décrits dans les figures 2 et 3.

Le procédé selon l'invention et le dispositif pour sa mise en œuvre, dont on vient de décrire des exemples de réalisation, comportent plusieurs applications dont trois sont mentionnées ci-après.

Une première application du procédé selon l'invention réside dans la possibilité de connaître et d'enregistrer l'ordonnée y instantanée du drain posé en fonction de l'abscisse x. Cette information est particulièrement intéressante puisqu'elle permet de vérifier si la pente instantanée du drain posé est conforme à celle prévue, et surtout de détecter les éventuelles contre-pentes dudit drain, néfastes à son bon fonctionnement.

3

On peut à cette fin utiliser directement l'information donnée par l'inclinomètre 9. Les différentes valeurs de la pente mesurées représentent les pentes successives des incréments de tronçon de drain posé.

On dispose ainsi d'une succession de valeurs de pentes pour chaque incrément de longueur de drain posé. A chaque instant, la pente $\alpha$ est égale à la dérivée $dy/dx$ de sorte que, par intégration sur un parcours de longueur x (mesurée par exemple par une roulette 17 déterminant la longueur de drain dévidée) on peut obtenir l'ordonnée y par l'intégrale

$$y = \int_0^x$$

$\alpha$, dx, et donc la pente égale à $y/x$.

On peut ainsi connaître, la pente instantanée du drain posé correspondant à l'incrément de tronçon posé. Les abscisses x et les ordonnées y du drain 1 peuvent être enregistrées, ainsi que les pentes successives du drain posé.

Cette méthode de calcul de la pente des tronçons de drain posé, pour une longueur donnée, est satisfaisante. Cependant, l'utilisation d'un inclinomètre, pour mesurer l'angle (c'est-à-dire la pente), fait apparaître une légère différence entre l'angle $\theta$ mesuré et l'angle réel $\alpha$. En effet, l'inclinomètre 9 n'est sensible qu'aux accélérations et ceci indépendamment de la nature de ces accélérations. La valeur mesurée $\theta$, subit donc l'influence de l'accélération de la pesanteur g, et représente en fait l'angle que fait l'accélération totale $\vec{\gamma} = \vec{g} - \vec{\ddot{x}}$ avec le drain ($\vec{\ddot{x}}$ étant l'accélération propre du dispositif dans le repère fixe xOy). Soit $tg(\theta - \alpha) = -\ddot{x}/g$ en supposant que $\alpha$ est petit. Du fait de la valeur faible des angles, on peut réaliser l'approximation : $tg(\theta - \alpha) = tg\,\theta - tg\,\alpha$, on obtient alors $\alpha = \theta + Arctg\,\ddot{x}/g$ et en supposant $Arctg\,\ddot{x}/g \simeq \ddot{x}/g$, on aboutit à la valeur suivante :

$$\alpha = \theta + \frac{\ddot{x}}{g} \qquad\qquad\text{(formule 1)}$$

Or, on sait que, par définition de la pente $dy/dx = \alpha$. On peut donc écrire que

$$y = \int_0^t \alpha\dot{x}\,dt \qquad\qquad\text{(formule 2)}$$

où x est la dérivée première de x par rapport au temps. Ainsi, la connaissance de x, longueur de drain posé, et de $\theta$, suffit pour déterminer l'ordonnée y du drain qui vaut donc, en combinant les formules (1) et (2),

$$y = \int_0^t \theta\dot{x}\,dt + \frac{K}{2\,g}\dot{x}^2 \qquad\qquad\text{(formule 3)}$$

où k est un coefficient introduit pour tenir compte de l'approximation $\ddot{x}/g = Arctg\,\ddot{x}/g$. L'angle $\theta$ est donné par l'inclinomètre 9, l'abscisse x par l'organe 17 ; on peut par la formule 3 calculer l'ordonnée y et de là, la pente du drain.

La figure 6 est un schéma synoptique montrant le traitement des données mesurées et calculées suivant la première application décrit ci-dessus, en tenant compte de la correction due à l'accélération de la pesanteur g.

L'inclinomètre 9 donne la valeur de l'angle $\theta$ mesuré qui est injectée dans un multiplicateur 18 dont l'autre entrée reçoit la valeur de la dérivée $\dot{x}$ de x obtenue par le dérivateur 19 à partir de la valeur x donnée par la roulette 17. Un intégrateur 20 est branché sur la première entrée d'un additionneur 21 dont la seconde entrée reçoit la valeur de $\dot{x}^2$ provenant d'un multiplicateur 22. La sortie de l'additionneur 21 donne la valeur de y (d'après la formule 3). Le générateur de constante 23 introduit la valeur de $K/2g$ dans l'additionneur. Les valeurs de y et de x sont enregistrées et visualisées par l'organe 24 qui comporte un diviseur apte à calculer les pentes $y/x$ des tronçons de drain.

Une seconde application du procédé selon l'invention est l'automatisation du réglage de la pression d'appui appliquée sur la dent 2 par l'engin 3 tractant et supportant cette dernière. En effet, pour stabiliser la dent dans le sol on reporte généralement une partie du poids de l'engin tracteur et porteur 3 sur l'outil de travail. Cette pression d'appui doit être réglée en fonction notamment de la nature du terrain et du profil de l'outil. Pour un terrain et un outil donnés, il existe donc des inclinaisons optimales respectivement de la pente du drain et de l'outil de travail par rapport à l'horizontale, et plus particulièrement, la différence entre ces deux angles correspond à une valeur constante $\beta_0$. Or, cette différence est justement égale, par définition, à l'angle $\beta$. Ainsi, la comparaison de l'angle $\beta$, mesuré à chaque instant par le détecteur de proximité 11, et de la constante $\beta_0$ (fixée une fois pour toute au début des travaux) permet indirectement d'agir sur la force d'appui exercée par l'engin sur l'outil de travail. La différence entre la constante $\beta_0$ et la mesure $\beta$ sera utilisée pour actionner des organes, tels que des électrovannes, aptes à agir sur le circuit hydraulique relié au vérin 8 (figure 1) afin de réduire ou d'augmenter ladite pression d'appui de l'engin sur l'outil.

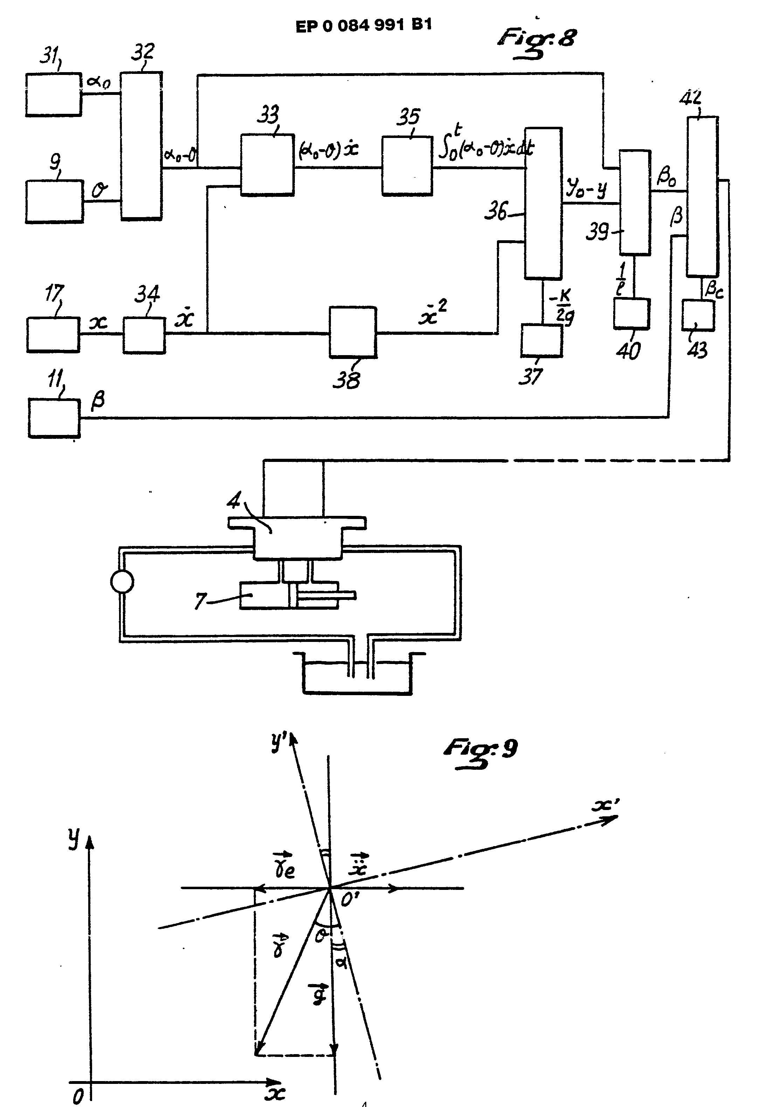

On a représenté sur la figure 7 un schéma synoptique correspondant à la seconde application et montrant le détecteur de proximité 11 et le générateur de constante 25 donnant respectivement les valeurs de $\beta$ et $\beta_0$ introduites ensuite dans un générateur de commande 26 engendrant un signal I fonction de la différence $(\beta - \beta_0)$. La sortie dudit générateur 26 est reliée (par deux diodes 27 et 28 en position inversée l'une par rapport à l'autre), à des organes 29 et 30 tels que des limiteurs de pression hydraulique reliés au circuit hydraulique commandant le vérin 8. En fonction de la valeur de la différence entre $\beta$ (valeur mesurée) et $\beta_0$ (valeur imposée), le vérin 8 est actionné dans un sens ou dans l'autre, modifiant la face d'appui de l'engin sur l'outil de travail.

Une troisième application du dispositif est le guidage de l'outil de travail dans le sol. Le principe de ce type d'outil veut que le talon passe dans le sillage de la pointe M placée en avant de l'outil. Ainsi, le guidage de la pointe de l'outil permet d'assurer le guidage du talon. Il est donc du plus grand intérêt pour ce réglage de connaître la position de cette pointe M et notamment son ordonnée Y. Soit I la longueur séparant le talon (montré par T sur la figure 1) et la pointe M. L'ordonnée théorique $Y_0$ que l'on voudrait donner à la pointe M, est $Y_0 = y_0 + 1\,\alpha_0$ où $y_0$ et $\alpha_0$ sont les valeurs de référence respectivement de l'ordonnée de T (donc du drain à la sortie de l'outil) et de la pente du drain posé 1. La valeur réelle Y de l'ordonnée de M est en fait $Y = y + 1(\alpha + \beta)$, où y est l'ordonnée réelle de O (donc du drain à la sortie de l'outil). Or, l'on désire obtenir $Y = Y_0$ ; cette égalité n'est possible que pour un angle $\beta$ égal à une valeur de référence $\beta_0$ ; on obtient alors

$$\beta_0 = \frac{1}{I}\,(y_0 - y) + (\alpha_0 - \alpha).$$

Ainsi, la connaissance d'une part de l'ordonnée y instantanée du tronçon de drain posé, et donc la position du talon de la dent, et d'autre part, de la pente instantanée du tronçon de drain posé, permet de déterminer la valeur $\beta_0$ de référence.

En prenant pour valeur approximative de $\alpha$ la valeur $\theta$ mesurée par l'inclinomètre 9, et en combinant avec la formule 3 citée plus haut permettant de calculer y après correction due à l'influence de la pesanteur sur l'inclinomètre, on obtient,

$$\beta_0 = \frac{1}{I}\int_0^t (\alpha_0 - \theta)\,\dot{x} - \frac{1}{I}\cdot\frac{1}{2\,g}\,K\dot{x}^2 + (\alpha_0 - \theta) \qquad \text{(formule 4)}$$

où g, I, $\alpha_0$ et K sont donnés, et $\theta$ et x mesurés.

En fait, la valeur mesurée $\beta$ doit être pondérée par une valeur de consigne $\beta_c$ tenant compte de la géométrie de la dent. Cette valeur $\beta_c$ peut être différente de la valeur de référence donnée dans la description de la seconde application.

En comparant $(\beta + \beta_c)$ et $\beta_0$ (calculé par la formule 4), on peut ajuster la position instantanée de la pointe M avec une bonne précision.

Cette troisième application du procédé permet, de façon indirecte, de comparer la pente instantanée de tronçons de drain posés à la pente de référence imposé dudit tronçon.

Le schéma synoptique de la figure 8 montre le traitement et le calcul des données selon l'exemple décrit précédemment correspondant à la troisième application du procédé.

La valeur $\theta$ mesurée par l'inclinaison 9 et la valeur $\alpha_0$ de référence donnée par le générateur de constante 31 sont introduites dans le différenciateur 32 dont la sortie est reliée au multiplicateur 33 recevant sur son autre entrée la valeur $\dot{x}$ provenant du dérivateur 34. La valeur $(\alpha_0 - \theta)\dot{x}$ est ensuite introduite dans l'intégrateur 35 dont la sortie est reliée au différenciateur 36. Ce dernier reçoit ensuite les valeurs de K/2g et $\dot{x}^2$ provenant respectivement du générateur de constante 37 et du multiplicateur 38. Un multiplicateur additionneur 39 reçoit les valeurs $\alpha_0 - \theta$, 1/I (issu du générateur de constante 40) et $Y_0 - y$ et calcule la valeur $\beta_0$ obtenue ainsi par la formule 4. Le comparateur de commande 42 reçoit les valeurs $\beta_0$, $\beta$ (venant du détecteur de proximité 11) et $\beta_c$ (issu du générateur de constante 43). Le signal de sortie du comparateur 42 est introduit dans une servovalve 44 à action proportionnelle reliée au circuit hydraulique de pression de l'engin. Selon la valeur relative $\beta + \beta_c - \beta_0$, le liquide hydraulique est injecté dans l'une ou l'autre des chambres du vérin 7, apte à commander l'orientation de la dent par rapport au bâti.

On a représenté sur la figure 9, les liaisons angulaires entre les différentes forces auxquelles est soumis l'inclinomètre. Le repère xOy est fixe et lié au sol, tandis que le repère x'O'y' est lié audit inclinomètre. L'angle $\alpha$ est l'angle que font l'axe O'x' et l'horizontale (parallèle à Ox). L'angle $\theta$ mesuré représente en fait l'angle entre l'accélération totale $\vec{\gamma}$ avec la verticale du repère lié au drain, c'est-à-dire O'y'. $\vec{\gamma_e}$ est la force d'entraînement dans le repère x'O'y' et $\vec{x}$ l'accélération de l'engin suivant l'axe Ox du repère fixe xOy. Par définition, $\vec{\gamma} = g + \vec{\gamma_e}$, or $\vec{\gamma_e} = -\ddot{x}$, d'où $\vec{\gamma} = \vec{g} - \vec{x}$. On obtient ainsi $\operatorname{tg}(\theta - \alpha) = \gamma_e/g = -x/g$, et selon les calculs effectués précédemment, on aboutit à $\alpha = \theta + \ddot{x}/g$ et à la formule 3 donnant la valeur de l'ordonnée y du drain.

**Revendications**

1. Procédé pour la détermination de la position dans un plan sensiblement vertical d'une conduite souple, telle qu'un drain, en cours d'enfouissement dans le sol au fond d'une tranchée par un outil de

# EP 0 084 991 B1

travail, caractérisé en ce que l'on détecte en continu l'inclinaison d'au moins un élément palpeur (10), lié à l'outil (2), en contact avec la portion élémentaire de conduite souple (1) venant d'être posée au fond de la tranchée, ladite inclinaison étant représentative de la pente par rapport à un plan horizontal de ladite portion élémentaire de conduite souple, et en ce qu'on détermine ladite position de la conduite souple à partir de l'ensemble des mesures successives des inclinaisons des portions élémentaires de conduite souple.

2. Procédé selon la revendication 1, caractérisé en ce que l'on mesure la longueur de conduite souple posée, en ce que l'on calcule en continu l'ordonnée y des portions élémentaires de conduite successives posées en fonction de l'abscisse x desdites portions élémentaires et des différentes pentes dy/dx successives des portions élémentaires de conduite.

3. Procédé selon la revendication 1, caractérisé en ce que, pour imposer une position dans un plan sensiblement vertical à la conduite souple, on mesure l'angle $\beta$ que fait l'outil de travail (2) avec la direction de la portion élémentaire de conduite posée (1), on compare ledit angle avec un angle de référence donné $\beta_0$ en fonction du profil de l'outil (2) et de la nature du sol, et on agit en fonction de cette différence sur la pression d'appui exercée sur l'outil de travail (2).

4. Procédé selon la revendication 1, caractérisé en ce que, pour imposer une position dans un plan sensiblement vertical à la conduite souple, on mesure en outre l'angle $\beta$ que fait l'outil (2) avec la direction de la portion élémentaire de conduite souple posée (1), on calcule la valeur théorique de cet angle $\beta_0$ correspondant à la position optimale de l'outil, et on compare la valeur calculée $\beta_0$ et la valeur mesurée $\beta$ de cet angle, la différence de ces deux valeurs permettant d'agir sur des moyens d'actionnement (44, 7) modifiant la position de l'outil (2).

5. Dispositif pour la mise en œuvre du procédé selon la revendication 1, caractérisé en ce qu'il comporte un organe palpeur (10) en contact avec la portion élémentaire de conduite souple (1) venant d'être posée au fond de la tranchée et dont l'inclinaison est représentative de la pente par rapport à un plan horizontal de ladite portion élémentaire de conduite souple, un organe de mesure de ladite inclinaison, tel qu'un inclinomètre (9), et des moyens (11, 18, 23) pour déterminer la position de la conduite souple à partir de l'ensemble des mesures successives des inclinaisons des portions élémentaires de conduite souple.

6. Dispositif selon la revendication 5, caractérisé en ce qu'il comporte en outre des moyens de calcul (18, 19, 20, 21, 22, 23) des ordonnées des portions élémentaires de conduite posées (1) en fonction de l'abscisse x, un organe de calcul des pentes instantanées desdites portions élémentaires associé à des moyens (24) pour enregistrer et visualiser les données calculées et mesurées, lesdits moyens de calcul étant aptes à effectuer la correction nécessaire due à la sensibilité de l'inclinomètre (9) à la pesanteur.

7. Dispositif selon l'une des revendications 5 ou 6, caractérisé en ce qu'il comporte en outre des moyens de mesure, tel qu'un détecteur de proximité (11) associé à l'organe palpeur (10), aptes à mesurer l'angle $\beta$ que fait l'outil de travail (2) avec ledit palpeur.

8. Dispositif selon la revendication 7, pour la mise en œuvre du procédé selon la revendication 3, caractérisé en ce qu'il comporte en outre des moyens de calcul (26) permettant de comparer la valeur de l'angle mesurée avec une valeur de référence donnée $\beta_0$ en fonction du profil de l'outil et de la nature du sol, et des moyens d'actionnement (8, 29 et 30) aptes à modifier la pression d'appui exercée sur ledit outil (2) en fonction de la différence entre la valeur mesurée $\beta$ et la valeur de référence $\beta_0$.

9. Dispositif selon l'une des revendications 5 à 8, caractérisé en ce que l'organe palpeur (10) est constitué d'un bras (10) articulé sensiblement en son milieu à l'extrémité arrière de l'outil (2), la partie arrière (14) du bras (10) dépassant de l'outil d'une longueur représentant la portion élémentaire de conduite venant d'être posée, tandis que la partie avant (13) du bras (10) est associée audit inclinomètre (9).

10. Dispositif selon l'une des revendications 5 à 9, caractérisé en ce qu'il comporte un organe de rappel (15), tel qu'un ressort, permettant d'obliger constamment l'organe palpeur (10) à suivre le tronçon du fond de la tranchée venant d'être ouverte.

**Claims**

1. Process for determining the position in a substantially vertical plane of a supple pipe, such as a drain, which is being buried in the ground at the bottom of a trench by a working tool, characterized in that it comprises the step of continuously detecting the inclination of at least one sensor element (10), connected to the tool (2), in contact with the increment of section of supple pipe (1) which has just been laid at the bottom of the trench, said inclination being representative of the gradient with respect to a horizontal plane of said increment of section of supple pipe, and the step of determining the position of the supple pipe from the set of the successive measures of the inclinations of the section increments of supple pipe.

2. Process according to claim 1, characterized in that the length of supple pipe laid is measured, in that the ordinate y of the successive section increments of pipe laid as a function of the abscissa x of said increments of sections and the different successive gradients dy/dx of the increments of sections of pipe is continuously calculated.

6

3. Process according to claim 1, characterized in that, in order to give to supple pipe a determined position in a substantially vertical plane, the angle $\beta$ made by the working tool (2) with the direction of the increment of section of pipe laid (1) is measured, said angle is compared with a given reference angle $\beta_0$ as a function of the profile of the tool (2) and of the nature of the ground, and the bearing pressure exerted on the working tool (2) is determined as a function of this difference.

4. Process according to claim 1, characterized in that, in order to give to supple pipe a determined position in a substantially vertical plane, in addition, the angle $\beta$ which the tool (2) makes with the direction of the increment of section of supple pipe laid (1) is measured, the theoretical value of this angle $\beta_0$ corresponding to the optimal position of the tool is calculated, the calculated value $\beta_0$ and the measured value $\beta$ of this angle are compared, the difference of these two values making it possible to act on actuating means (44, 7) altering the position of the tool (2).

5. Device for carrying out the process of claim 1, characterized in that it comprises a sensor member (10) in contact with the increment of section of supple pipe (1) which has just been laid at the bottom of the trench, and of which the inclination is representative of the gradient with respect to a horizontal plane of said increment of section of supple pipe, a member for measuring this inclination, such as an inclinometer (9), and means (11, 18, 23) for determining the position of the supple pipe from the set of the successive measures of the inclinations of the section increments of supple pipe.

6. Device according to claim 5, characterized in that it further comprises means (18, 19, 20, 21, 22, 23) for calculating the ordinates of the increments of section of laid pipe (1) as a function of the abscissa x, a member for calculating the instantaneous gradients of said increments, associated with means (24) for recording and displaying the data calculated and measured, said calculating means being adapted to effect the necessary correction due to the sensitivity of the inclinometer (9) to gravity.

7. Device according to one of claims 5 or 6 characterized in that it further comprises measuring means, such as a proximity detector (11) associated with the sensor member (10), adapted to measure the angle $\beta$ made by the working tool (2) with said sensor.

8. Device according to claim 7, for carrying out the process of claim 3, characterized in that it further comprises calculating means (26) comparing the value of the angle measured with a given reference value $\beta_0$ as a function of the profile of the tool and of the nature of the ground, and actuating means (8, 29 and 30) adapted to modify the bearing pressure exerted on said tool (2) as a function of the difference between the measured value $\beta$ and the reference value $\beta_0$.

9. Device according to one of claims 5 to 8 characterized in that the sensor member (10) is constituted by an arm (10) articulated substantially at its centre on the rear end of the tool (2), the rear part (14) of the arm (10) projecting beyond the tool by a length representing the increment of the section of pipe which has just been laid, whilst the front part (13) of the arm (10) is associated with said inclinometer (9).

10. Device according to one of claims 5 to 9 characterized in that it comprises a return member (15) such as a spring, making it possible constantly to oblige the sensor member (10) to follow the section of the bottom of the trench which has just been opened.

**Patentansprüche**

1. Verfahren zur Bestimmung der Lage einer biegsamen Leitung, beispielsweise einer Abflußleitung, in einer ungefähr vertikalen Ebene während des Einbringens in das Erdreich am Boden eines Grabens mittels eines Arbeitswerkzeuges, dadurch gekennzeichnet, daß die Neigung zumindest eines am Werkzeug (2) angebrachten Tastelements (10), das mit dem zuvor auf den Boden des Grabens gelegten Elementarabschnitt der biegsamen Leitung (1) in Kontakt ist, kontinuierlich erfaßt wird, wobei diese Neigung dem Gefälle dieses Elementarabschnitts der biegsamen Leitung bezüglich einer Horizontalebene entspricht, und daß diese Lage der biegsamen Leitung auf der Grundlage der Gesamtheit der aufeinanderfolgenden Messungen der Neigungen der Elementarabschnitte der biegsamen Leitung bestimmt wird.

2. Verfahren nach Anspruch 1, dadurch gekennzeichnet, daß die Länge der verlegten biegsamen Leitung gemessen wird und daß die Ordinate y der aufeinanderfolgenden verlegten Elementarabschnitte der Leitung aus der Abszisse x dieser Elementarabschnitte und den verschiedenen aufeinanderfolgenden Neigungen dy/dx der Elementarabschnitte der Leitung kontinuierlich berechnet wird.

3. Verfahren nach Anspruch 1, dadurch gekennzeichnet, daß, um eine Lage der biegsamen Leitung in einer ungefähr vertikalen Ebene vorzugeben, der Winkel $\beta$, den das Arbeitswerkzeug (2) mit der Richtung des Elementarabschnitts der verlegten Leitung (1) bildet, gemessen wird, daß dieser Winkel mit einem abhängig vom Profil des Werkzeugs (2) und der Beschaffenheit des Bodens vorgegebenen Referenzwinkel $\beta_0$ verglichen wird, und daß in Abhängigkeit von dieser Differenz auf den auf das Arbeitswerkzeug (2) ausgeübten Stützdruck Einfluß genommen wird.

4. Verfahren nach Anspruch 1, dadurch gekennzeichnet, daß, um eine Lage der biegsamen Leitung in einer ungefähr vertikalen Ebene vorzugeben, außerdem der Winkel $\beta$, den das Werkzeug (2) mit der Richtung des Elementarabschnitts der verlegten biegsamen Leitung (1) bildet, gemessen wird, daß der theoretische Wert dieses Winkels $\beta_0$, welcher der optimalen Stellung des Werkzeugs entspricht, berechnet wird, und daß der berechnete Wert $\beta_0$ mit dem gemessenen Wert $\beta$ dieses Winkels verglichen wird, wobei die Differenz dieser beiden Werte ein Einwirken auf die Betätigungsmittel (44, 7), welche die Stellung des Werkzeugs (2) verändern, erlaubt.

5. Vorrichtung zur Ausführung des Verfahrens nach Anspruch 1, dadurch gekennzeichnet, daß ein Tastorgan (10) vorgesehen ist, welches sich in Kontakt mit dem unmittelbar vorher auf dem Boden des Grabens ausgelegten Elementarabschnitt der beweglichen Leitung (1) befindet und dessen Neigung dem Gefälle des Elementarabschnitts der biegsamen Leitung bezüglich einer Horizontalebene entspricht, daß ferner ein Meßorgan, beispielsweise ein Neigungsmesser (9), für diese Neigung und daß Mittel (11, 18, 23) zum Bestimmen der Lage der flexiblen Leitung auf der Grundlage der Gesamtheit der aufeinanderfolgenden Messungen der Neigungen der Elementarabschnitte der biegsamen Leitung vorgesehen sind.

6. Vorrichtung nach Anspruch 5, dadurch gekennzeichnet, daß außerdem Rechenmittel (18, 19, 20, 21, 22, 23) für die Ordinaten der Elementarabschnitte der verlegten Leitung (1) als Funktion der Abszisse x und ein Rechenorgan für die momentanen Neigungen der Elementarabschnitte in Verbindung mit Mitteln (24) zur Speicherung und Sichtbarmachung der errechneten und gemessenen Daten vorgesehen sind, wobei diese Rechenmittel dazu geeignet sind, die infolge der Empfindlichkeit des Neigungsmessers (9) gegenüber der Schwerkraft erforderlichen Korrekturen auszuführen.

7. Vorrichtung nach einem der Ansprüche 5 oder 6, dadurch gekennzeichnet, daß außerdem Meßmittel, zum Beispiel ein mit dem Tastorgan (10) zusammenwirkender Näherungsdetektor (11), vorgesehen sind, die dazu geeignet sind, den Winkel $\beta$ zu messen, den das Arbeitswerkzeug (2) mit dem Tastorgan bildet.

8. Vorrichtung nach Anspruch 7 zur Ausführung des Verfahrens nach Anspruch 3, dadurch gekennzeichnet, daß außerdem Rechenmittel (26) vorgesehen sind, die es erlauben, den Wert des gemessenen Winkels mit einem abhängig vom Profil des Arbeitswerkzeugs und der Beschaffenheit des Bodens vorgegebenen Referenzwert $\beta_0$ zu vergleichen, und daß Betätigungsmittel (8, 29 und 30) vorgesehen sind, die dazu geeignet sind, den auf dieses Werkzeug (2) als Funktion der Differenz zwischen dem gemessenen Wert $\beta$ und dem Referenzwert $\beta_0$ ausgeübten Stützdruck zu verändern.

9. Vorrichtung nach einem der Ansprüche 5 bis 8, dadurch gekennzeichnet, daß das Tastorgan einen Arm (10) aufweist, der etwa in seiner Mitte an dem hinteren Ende des Werkzeugs (2) drehbar gelagert ist, wobei der hintere Teil (14) des Armes (10) das Werkzeug (2) um eine Länge überragt, welche den Elementarabschnitt der zuvor verlegten Leitung darstellt, während der vordere Teil (13) des Armes (10) mit dem Neigungsmesser (9) zusammenwirkt.

10. Vorrichtung nach einem der Ansprüche 5 bis 9, dadurch gekennzeichnet, daß ein Rückzugorgan (15) zum Beispiel eine Feder, vorgesehen ist, die das Tastorgan (10) ständig zwingt, dem Verlauf des Bodens des zuvor geöffneten Grabens zu folgen.

*Fig:1*

*Fig:2*

*Fig:3*

1

*Fig.4*

*Fig.5*

## Fig:6

## Fig:7

Fig. 8

Fig. 9